(19) Europäisches Patentamt
European Patent Office
Office européen des brevets

(11) Veröffentlichungsnummer: **0 413 301 B1**

(12) **EUROPÄISCHE PATENTSCHRIFT**

(45) Veröffentlichungstag der Patentschrift: **23.02.94**

(51) Int. Cl.$^5$: **C09J 133/06**

(21) Anmeldenummer: **90115557.2**

(22) Anmeldetag: **14.08.90**

# (54) Verfahren zur Herstellung von Haftklebern und deren Verwendung.

(30) Priorität: **16.08.89 DE 3926897**

(43) Veröffentlichungstag der Anmeldung:
**20.02.91 Patentblatt 91/08**

(45) Bekanntmachung des Hinweises auf die Patenterteilung:
**23.02.94 Patentblatt 94/08**

(84) Benannte Vertragsstaaten:
**AT BE CH DE DK ES FR GB GR IT LI LU NL SE**

(56) Entgegenhaltungen:
**EP-B- 0 081 846**
**WO-A-89/05841**
**DE-A- 3 304 695**
**DE-C- 3 901 690**

**DERWENT ACCESSION NO. 86-186 105, Ouestel Tele- systems (WPIL), DERWENT PUBLICATIONS LTD., London; & JP-A-61 118 480**

**DERWENT ACCESSION NO. 78-39 275-A, Ouestel Tele- systems (WPI), DERWENT PUBLICATIONS LTD., London; & JP-A-53 043 742**

(73) Patentinhaber: **Lohmann GmbH & Co. KG**
**Irlicher Strasse 55**
**D-56567 Neuwied(DE)**

(72) Erfinder: **Czech, Zbigniew, Dr. Dipl.-Chem.**
**Rostocker Strasse 10**
**D-5400 Koblenz 1(DE)**
Erfinder: **Lindner, Edgar**
**Weihersbergstrasse 24**
**D-5451 Melsbach(DE)**

(74) Vertreter: **Flaccus, Rolf-Dieter, Dr.**
**Patentanwalt**
**Sperlingsweg 32**
**D-50389 Wesseling (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Haftklebern, bei welchem ein Entfernen des Polymerisationsmediums nicht notwendig ist, die nach dem Verfahren hergestellten Haftkleber sowie ihre Verwendung zur Herstellung von Haftklebeartikeln.

Massen- oder Lösemittelpolymerisationen die durch Erwärmen, Bestrahlung oder Zusatz eines Initiators in Gang gebracht werden, sind bekannt.

Die technische Beherrschung der Massenpolymerisation ist unter Umständen besonders schwierig und gelingt nur durch den Einsatz von Reaktoren mit großer Kühloberfläche pro Volumeneinheit. Die lösemittelhaltigen Systeme erfordern bei der Beschichtung ein Entfernen des flüssigen Polymerisationsmediums, was einen beträchtlichen Energieaufwand erfordert und zu Umweltbelastungen führt.

Der Erfindung liegt die Aufgabe zugrunde, ein Verfahren zur Herstellung von Haftklebern zu entwickeln, bei dem ein Entfernen des Polymerisationsmediums nicht notwendig ist, und welches sich durch Umweltfreundlichkeit und geringen Energie- und Materialverbrauch auszeichnet.

Die Aufgabe wurde gelöst durch ein Verfahren zur Herstellung von Haftklebern durch Polymerisationsreaktion unter Verwendung von (Meth)acrylsäure und/oder deren Derivaten in einem inerten, flüssigen Medium, bei dem das flüssige Medium nach der Polymerisationsreaktion einen Bestandteil des Haftklebers bildet und der gebrauchsfähige Zustand des Haftklebers durch eine Vernetzungsreaktion erreicht wird.

Nach einer Ausführungsform der Erfindung beträgt der Anteil des inerten flüssigen Mediums am gesamtem Polymerisationsansatz 5 bis 60 Gew.-%, vorzugsweise 15 bis 40 Gew.-%.

Bei einer vorteilhaften Ausführungsform wird eingesetzt

- 60 bis 90 Gew.-% mindestens eines klebrigmachenden (Meth)acrylsäureesters,
- 1 bis 25 Gew.-% mindestens eines hydroxylgruppenhaltigen (Meth)acrylsäureesters,
- 0,5 bis 11 Gew.-% mindestens eines N-substituierten (Meth)acrylamidderivates,
- 0,1 bis 10 Gew.-% mindestens einer Vinylcarbonsäure,
- 0,05 bis 1,0 Gew.-% eines radikalischen Initiators und
- 5 bis 40 Gew.-% mindestens eines flüssigen Polyols einer Molekularmasse von 200 bis 10.000 als flüssigem Medium.

Bei einer weiteren vorteilhaften Ausführungsform werden eingesetzt:

- 60 bis 90 Gew.-% mindestens eines klebrigmachenden (Meth)acrylsäureestern,
- 2 bis 40 Gew.-% mindestens eines hartmachenden (Meth)acrylsäureesters,
- 1 bis 2 Gew.-% einer mindestens Vinylcarbonsäure, 0,05 bis 1,0 Gew.-% eines radikalischen Initiators und
- 5 bis 40 Gew.-% mindestens eines carboxylgruppenhaltigen Acryloligomers als flüssigem Medium.

Das flüssige Polymerisationsmedium bildet nach der Polymerisation einen Bestandteil des Haftklebers; der gebrauchsfähige Zustand des Haftklebers wird nach einer Vernetzungsreaktion erreicht.

Als klebrigmachende (Meth)acrylsäureester können beispielsweise Propyl-, Butyl-, Pentyl-, Hexyl-, Heptyl-, Octyl-, Isooctyl-, 2-Ethylhexyl-, Nonyl- oder Isononylacrylat, Decyl- oder Dodecylmethacrylat eingesetzt werden.

Vorzugsweise werden klebrigmachende (Meth)acrylsäureester eingesetzt, deren Homopolymerisate Glasübergangstemperaturen unterhalb von -39 °C besitzen.

Als hydroxylgruppenhaltige (Meth)acrylsäureester kommen bevorzugt 2-Hydroxyethyl(meth)acrylat, 2-Hydroxypropyl(meth)acrylat oder 4-Hydroxybutyl(meth)acrylat in Frage, die allein oder im Gemisch miteinander eingesetzt werden können.

Als N-substituierte (Meth)acrylamidderivate werden Verbindungen der allgemeinen Formel

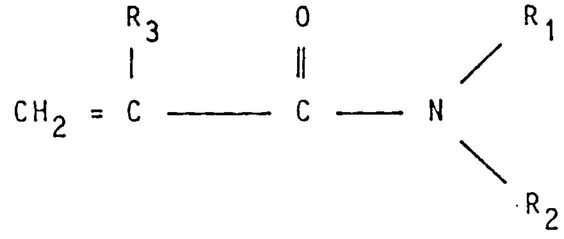

eingesetzt, wobei
$R_1$ und $R_2$ gleich oder verschieden sind und Wasserstoff, eine Alkyl-, Aryl-, Arylalkyl-, Alkylaryl-, Alkoxyalkyl-, Alkoxyaryl-, Carboxyalkyl-, Carboxyaryl-, Acetylalkyl- oder Acetylalkoxyalkylgruppe bedeuten und $R_3$ Wasserstoff oder eine Methylgruppe ist.

Insbesondere geeignet sind: Diacetonacrylamid, Isobornylacrylamid, Diethyl(meth)acrylamid, tert.-Butylacrylamid, tert.-Hexylacrylamid, Benzylacrylamid, Cyclohexylacrylamid, 3-Methoxyisopropylacrylamid, Dibutylmethacrylamid oder 3-Acrylamido-3-Methyl-Buttersäure.

Als Vinylcarbonsäuren werden bevorzugt (Meth)acrylsäure, β-Acryloyloxypropionsäure, Vinylessigsäure, Aconitsäure, Trichloracrylsäure, Dimethylacrylsäure, Crotonsäure, Fumarsäure oder Itaconsäure eingesetzt. Besonders bevorzugt sind (Meth)acrylsäure und β-Acryloyloxypropionsäure.

Als hartmachende (Meth)acrylsäureester sind beispielsweise Methyl-, tert.-Butyl-, Dodecyl- oder Hexadecylacrylat oder Ethyl-, Propyl-, Butyl-, Pentyl-, Hexadecyl-, Methoxyethyl- oder Glycidylmethacrylat geeignet. Besonders bevorzugt sind Methylacrylat und Ethylmethacrylat.

Vorzugsweise werden hartmachende (Meth)acrylsäureester eingesetzt, deren Homopolymerisate Glasübergangstemperaturen zwischen 0 °C und +80 °C besitzen.

Geeignete radikalische Initiatoren für die Polymerisation sind z.B. Azoisobutyronitril, Dibenzoylperoxid, Dilaurylperoxid, ter.-Butylperpivalat, -peroctat und -peracetat.

Als flüssige Polyole kommen vor allem Polyethylenglykole 200, 300, 400, 600, Polypropylenglykole 400, 620, 1000, 2000, 4000, 5000, Glycerin, Diglycerin und Dipentaerythrit in Frage.

Als carboxylgruppenhaltige Acryloligomere werden bevorzugt solche einer Molekularmasse von 1000 bis 3500 eingesetzt. Beispielsweise können die von Th.Goldschmidt A.G. unter der Bezeichnung ACF 544, ACF 552 und ACF 553 vertriebenen Produkte verwendet werden.

Als bekannte Vernetzungsmittel, die dem Kleber innere Festigkeit verleihen, sind Polyisocyanate, Metallsäureester, wie beispielsweise Ethyl-, Propyl-, Butyltitanat etc., Metallchelate, wie beispielsweise Aluminium, Eisen, Titanacetylacetonat etc., Metallalkoholate, wie beispielsweise Zinn (II)-2-Ethylhexanat, Magnesiumethylat etc., Epoxid-, Aziridin-, Triazidin- oder Melaminformaldehydharze zu erwähnen.

Zur Kohäsionssteigerung der nach dem erfindungsgemäßen Verfahren hergestellten vernetzerhaltigen Haftklebemassen ist eine Wärmezufuhr erforderlich. Um die Vernetzungstemperatur herabzusetzen und gleichzeitig die Beschichtungsgeschwindigkeit bei der Herstellung von Haftklebeartikeln zu erhöhen, wurde der Haftklebemasse eine organische Säure zugesetzt, die als Katalysator wirkt. Besonders gute Ergebnisse wurden bei der Verwendung von p-Toluolsulfonsäure erreicht.

Die Polymerisationszeiten und Temperaturen der erfindungsgemäßen Polymerisationsreaktion sind gegenüber Massen- und Lösemittelpolymerisationen nicht verlängert.

Die nach dem erfindungsgemäßen Verfahren erhaltenen Haftklebemassen werden bevorzugt vor der Vernetzung auf ein Substrat aufgebracht und nach der thermischen Vernetzung zur Ausrüstung von hochwertigen Haftklebeartikeln verarbeitet. So weisen derartige Haftklebeartikel besonders erwünschte Eigenschaften auf wie ausgezeichnete Dauerhitzebeständigkeit, permanente Klebkraft und gleichzeitig Wiederablösbarkeit von diversen Substraten.

Die Erfindung wird nachstehend anhand folgender Beispiele erläutert:

## Beispiel 1

In eine 1 l Polymerisationsapparatur, ausgerüstet mit Rührer, Rückflußkühler, Thermometer und Tropftrichter werden 120 g Polypropylenglykol 4000 (Voranol EP 1900 der Fa. Dow Chemical Company) vorgelegt und unter Rühren auf 90 °C erhitzt. Zu dem Polyol wurde ein Gemisch aus 242 g 2-Ethylhexylacrylat, 14 g 4-Hydroxybutylacrylat, 14 g Acrylsäure, 8 g Diacetonacrylamid und 1,5 Azoisobuttersäurenitril (AIBN) innerhalb von 2,5 h zudosiert. Nach einer Gesamtreaktionszeit von 6h wird das erhaltene Polymerisat auf 20 °C abgekühlt ($\eta$ = 120 Pas), mit 14g Diphenylmethan-4,4'-diisocyanat (Desmodur VKS, Fa. Bayer) gemischt, auf eine Polyesterfolie (Auftragsgewicht 40 g/$m^2$) aufgetragen und im Wärmekanal 10 Minuten auf 130 °C erhitzt.

## Beispiel 2

In eine 1 l Polymerisationsapparatur, ausgerüstet mit Rührer, Rückflußkühler, Thermometer und Tropftrichter werden 275 g carboxylgruppenhaltiges Acryloligomer AFK 544 (Fa.Th.Goldschmidt A.G.) vorgelegt und unter Rühren auf 90 °C erhitzt. Zu dem carboxylgruppenhaltigen Acryloligomer wurde ein Gemisch aus 202,5 g Isooctylacrylat, 15,75 g Methylacrylat, 4,5 g Acrylsäure und 2,25 g AIBN innerhalb von 2,5 h zudosiert. Nach einer Gesamtreaktionszeit von 6h wird das erhaltene Polymerisat auf 20 °C abgekühlt ($\eta$ =

160 Pas), mit 20 g Melaminformaldehydharz Cymel 303 (Fa. Dyno Cyanamid) und 1,1 g p-Toluolsulfonsäure Cycat 4040 (Fa. Dyno Cyanamid) gemischt, auf eine Polyesterfolie (Auftragsgewicht 40 g/$m^2$) aufgetragen und im Wärmekanal 10 Minuten auf 110 °C erhitzt.

Beispiele 3 bis 16

Nach der Vorschrift von Beispiel 1 wurden die in der Tabelle 1 zusammengefassten Ausgangsgemische (Angaben in Gewichtsteilen) polymerisiert und die fertigen Polymerisate nach Beschichtung vernetzt.

Die Prüfwerte der daraus resultierenden Haftklebeartikeln wurden in der Tabelle 2 zusammengestellt, wobei in allen Fällen das Auftragsgewicht 40 g/$m^2$ beträgt.

Die experimentelle Bestimmung der Scherfestigkeit, des Tacks und der Klebkraft zeigen eindeutig, daß alle geprüften Haftklebeartikel gute mechanisch-thermische Belastbarkeit und gleichzeitig exzellente Trennkraftwerte aufweisen.

Erläuterung der verwendeten Abkürzungen:

| | |
|---|---|
| EHA | - 2-Ethylhexylacrylat |
| OA | - n-Octylacrylat |
| DMA | - Decylmethacrylat |
| HBA | - 4-Hydroxybutylacrylat |
| HPMA | - 2-Hydroxypropylmethacrylat |
| HEA | - 2-Hydroxyethylacrylat |
| DAA | - Diacetonacrylamid |
| IAA | - Isobornylacrylamid |
| DEMAA | - Diethylmethacrylamid |
| AS | - Acrylsäure |
| APS | - β-Acryloyloxypropionsäure |
| MAS | - Methacrylsäure |
| EP 1900 | - Polypropylenglykol Voranol EP 1900 mit einer Molekularmasse von 4000 (Fa.DOW Chemical Company) |
| P 41/300 | - Polyglykol mit einer Molekularmasse von 5000 (Fa.Hoechst) |
| AFK 544 | - Carboxylgruppenhaltiges Acryloligomer (Fa. Th.Goldschmidt AG) |
| VKS | - Diphenylmethan-4,4'-diisocyanat (Desmodur VKS Fa.Bayer) |
| SnEH | - Zinn(II)-2-Ethylhexanoat (Fa.Morton Thiokol Inc.) |
| Cymel 303 | - Melaminformaldehydharz der Fa. Dyno Cyanamid |

Tabelle 1

| Beispiel | Klebrigmachendes (Meth)acrylat (GT) | | | Hydroxylgruppenhaltiges (Meth)acrylat (GT) | | | N-substituiertes (Meth)acrylamid (GT) | | | Vinylcarbonsäure (GT) | | | Flüssiges Polymerisationsmedium (GT) | | | Vernetzungsmittel (GT) | | |
|---|---|---|---|---|---|---|---|---|---|---|---|---|---|---|---|---|---|---|
| | EHA | OA | DMA | HBA | HPMA | HEA | DAA | IAA | DEMAA | AS | APS | KAS | EP 1900 | P 41/300 | APK 544 | VKS | Sn EH | Cymel 303 |
| 3 | 82 | - | - | 10 | - | - | - | 2 | - | 6 | - | - | 25 | - | - | 6,5 | - | - |
| 4 | - | 70 | - | - | - | 15 | 2 | - | 3 | 7 | 3 | - | - | - | 21 | 5 | - | - |
| 5 | 60 | 10 | 5 | 4 | 5 | 1 | 6 | - | - | - | 9 | - | - | 40 | 13 | - | 10 | - |
| 6 | - | - | 96 | - | - | 2 | 1 | - | - | 6 | - | 1 | 40 | - | 50 | - | - | 8,5 |
| 7 | - | 50 | 15 | - | 17 | - | - | 9 | - | - | 1 | 8 | - | 16 | - | - | 12 | - |
| 8 | 80 | - | - | - | - | 12 | 1 | - | - | 7 | - | - | 40 | 20 | - | 7,5 | - | - |
| 9 | - | 85 | - | 2 | 1 | - | - | - | 4 | 6 | 2 | - | 30 | - | 40 | - | - | 10 |
| 10 | 40 | 50 | - | - | 6 | - | - | 1 | - | 3 | - | - | - | - | 15 | 8 | - | - |
| 11 | 60 | - | 25 | - | 5 | 1 | - | - | 1 | - | - | 8 | 5 | - | 15 | 3,5 | - | - |
| 12 | 95 | - | - | 1 | - | - | 1 | - | - | 3 | - | - | 11 | - | - | - | 9 | - |
| 13 | - | 60 | - | - | - | 25 | 5 | - | - | - | 10 | - | - | 35 | - | - | - | 7 |
| 14 | 80 | - | 10 | - | 3 | - | - | 2 | - | 5 | - | - | 20 | - | - | 4,5 | - | - |
| 15 | 30 | 30 | 20 | 5 | - | 5 | - | - | 4 | - | 6 | - | 40 | - | - | - | 11 | - |
| 16 | 90 | - | - | 2 | 3 | - | 1 | - | - | 3 | 1 | - | - | 12 | 12 | - | 5 | 5 |

Tabelle 2

| Beispiel | Tack (nach AFERA 4001) [N] | Klebkraft (nach AFERA 4015) [N] | | Scherfestigkeit (nach AFERA 4012) [N] | |
|---|---|---|---|---|---|
| | | 20 °C | 70 °C | 20 °C | 70 °C |
| 1 | 3,5 | 1,8 | 1,1 | 50 | 16 |
| 2 | 3 | 1,5 | 1,0 | 90 | 25 |
| 3 | 3 | 1,6 | 1,0 | 80 | 18 |
| 4 | 4 | 1,9 | 0,9 | 40 | 12 |
| 5 | 2,5 | 1,7 | 0,8 | 35 | 10 |
| 6 | 3,5 | 2 | 1,2 | 30 | 10 |
| 7 | 2,5 | 1,5 | 0,7 | 90 | 25 |
| 8 | 2,0 | 1,3 | 0,6 | 90 | 22 |
| 9 | 3,0 | 1,7 | 1,0 | 45 | 15 |
| 10 | 2,0 | 1,2 | 0,8 | 85 | 20 |
| 11 | 4,5 | 2,8 | 1,7 | 30 | 8 |
| 12 | 2,4 | 1,6 | 0,8 | 35 | 10 |
| 13 | 3,5 | 2,2 | 1,4 | 30 | 8 |
| 14 | 4,0 | 2,5 | 1,6 | 35 | 9 |
| 15 | 2,5 | 1,4 | 0,7 | 90 | 25 |
| 16 | 2,1 | 1,3 | 0,6 | 90 | 30 |

## Patentansprüche

1. Verfahren zur Herstellung von Haftklebern durch Polymerisationsreaktion unter Verwendung von (Meth)-acrylsäure und/oder deren Derivaten in einem inerten flüssigen Medium, dadurch gekennzeichnet, daß

das flüssige Medium nach der Polymerisationsreaktion einen Bestandteil des Haftklebers bildet und der gebrauchsfähige Zustand des Haftklebers durch eine Vernetzungsreaktion erreicht wird.

**2.** Verfahren nach Anspruch 1, dadurch gekennzeichnet, daß der Anteil des inerten flüssigen Mediums am gesamten Polymerisationsansatz 5 bis 60 Gew.-%, vorzugsweise 15 bis 40 Gew.-%, beträgt.

**3.** Verfahren nach Ansprüchen 1 und 2, dadurch gekennzeichnet, daß als inertes flüssiges Medium ein Polyol oder ein Gemisch von Polyolen mit einer Molekularmasse von 200 bis 10.000 eingesetzt wird.

**4.** Verfahren nach Ansprüchen 1 und 2, dadurch gekennzeichnet, daß als inertes flüssiges Medium carboxylgruppenhaltige Acryloligomere mit einer Molekularmasse von 1000 bis 3500 eingesetzt werden.

**5.** Verfahren nach Ansprüchen 1 bis 3, dadurch gekennzeichnet, daß ein Gemisch aus
60 bis 90 Gew.-% mindestens eines klebrigmachenden (Meth)acrylsäureesters,
1 bis 25 Gew.-% mindestens eines hydroxylgruppenhaltigen (Meth)acrylsäureesters,
0,5 bis 11 Gew.-% mindestens eines N-substituierten (Meth)acrylamidderivates,
0,1 bis 10 Gew.-% mindestens einer Vinylcarbonsäure, 0,05 bis 1,0 Gew.-% eines radikalischen Initiators und
5 bis 40 Gew.-% mindestens eines flüssigen Polyols einer Molekularmasse von 200 bis 10.000 der Polymerisation unterzogen und nach Zusatz von 0,3 bis 15 Gew.-Teilen Vernetzungsmittel auf 100 Gew.-Teile Polymerisat durch Erwärmen vernetzt wird

**6.** Verfahren nach Anspruch 5, dadurch gekennzeichnet, daß als hydroxylgruppenhaltige (Meth)-acrylsäureester 2-Hydroxyethyl(meth)acrylat, 2-Hydroxypropyl(meth)acrylat und/oder 4-Hydroxybutyl-(meth)acrylat eingesetzt werden.

**7.** Verfahren nach Anspruch 5, dadurch gekennzeichnet, daß als N-substituierte (Meth)acrylamidderivate Verbindungen der allgemeinen Formel

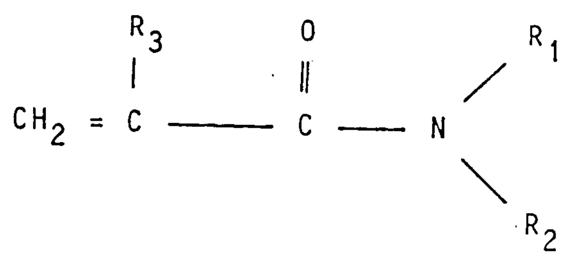

eingesetzt werden, wobei $R_1$ und $R_2$ gleich oder verschieden sind und Wasserstoff, eine Alkyl-, Aryl-, Arylalkyl-, Alkylaryl, Alkoxyalkyl-, Alkoxyaryl-, Carboxyalkyl-, Carboxyaryl-, Acetylalkyl- oder Acetylalkoxyalkylgruppe bedeuten und $R_3$ Wasserstoff oder eine Methylgruppe ist.

**8.** Verfahren nach einem der Ansprüche 1,2 und 4, dadurch gekennzeichnet, daß ein Gemisch aus
60 bis 90 Gew.-% mindestens eines klebrigmachenden (Meth)acrylsäureestern,
2 bis 40 Gew.-% mindestens eines hartmachenden (Meth)acrylsäureestern,
1 bis 2 Gew.-% mindestens einer Vinylcarbonsäure,
0,05 bis 1,0 Gew.-% eines radikalischen Initiators und
5 bis 40 % mindestens eines carboxylgruppenhaltigen Acryloligomeren der Polymerisation unterzogen und nach Zusatz von
0,3 bis 15 Gew.-Teilen Vernetzungsmittel auf
100 Gew.-Teile Polymerisat durch Erwärmen vernetzt wird.

**9.** Verfahren nach einem der Ansprüche 5 oder 8, dadurch gekennzeichnet, daß klebrigmachende (Meth)-acrylsäureester eingesetzt werden, deren Homopolymerisate Glasübergangstemperaturen unterhalb von -39 °C besitzen.

10. Verfahren nach Anspruch 8, dadurch gekennzeichnet, daß hartmachende (Meth)acrylsäureester eingesetzt werden, deren Homopolymerisate Glasübergangstemperaturen zwischen 0 °C und + 80 °C besitzen.

11. Verfahren nach Anspruch 8 und 10, dadurch gekennzeichnet, daß als hartmachende (Meth)-acrylsäureester Methyl-, tert.-Butyl-, Dodecyl- oder Hexadecylacrylat oder Ethyl-, Propyl-, Butyl-, Pentyl-, Hexadecyl-, Methoxyethyl- oder Glycidylmethacrylat eingesetzt werden.

12. Verfahren nach einem der Ansprüche 5 oder 8, dadurch gekennzeichnet, daß als Vinylcarbonsäuren (Meth)acrylsäure, β-Acryloyloxypropionsäure, Vinylessigsäure, Trichloracrylsäure, Dimethylacrylsäure, Crotonsäure, Fumarsäure, Aconitsäure und/oder Itaconsäure eingesetzt werden.

13. Verfahren nach einem der Ansprüche 5 oder 8, dadurch gekennzeichnet, daß als Vernetzungsmittel ein Polyisocyanat, ein Metallsäureester, ein Metallchelat, ein Metallalkoholat, ein Epoxid-, ein Aziridin-, ein Triazidin- oder ein Melaminformaldehydharz eingesetzt wird.

14. Verfahren nach Anspruch 13, dadurch gekennzeichnet, daß die Vernetzungsreaktion durch Zusatz einer organischen Säure katalysiert werden kann.

15. Verwendung der nach einem oder mehreren der vorangehenden Ansprüche hergestellten Haftkleber zur Herstellung von Haftkleberartikeln.

**Claims**

1. Process for the production of pressure-sensitive adhesives by polymerization reaction employing (meth)acrylic acid and/or the derivatives thereof in an inert liquid medium, characterized in that the liquid medium, after the polymerisation reaction, forms a constituent of the pressure-sensitive adhesive, and that the ready-for-use condition of the pressure-sensitive adhesive is achieved by a cross-linking reaction.

2. Process according to claim 1, characterized in that the portion of the inert liquid medium contained in the total polymerization preparation is 5 to 60%-wt., preferably 15 to 40%-wt.

3. Process according to claims 1 and 2, characterized in that a polyol or a mixture of polyols with a molecular mass of 200 to 10,000 is used as the inert liquid medium.

4. Process according to claim 1 and 2, characterized in that acrylic oligomers containing the carboxylic group and having a molecular mass of 1000 to 3500 are used as the inert liquid medium.

5. Process according to claims 1 to 3, characterized in that a mixture consisting of:
60 to 90%-wt. of at least one tackifying (meth)acrylic-acid ester,
1 to 25%-wt. of at least one (meth)acrylic-acid ester containing the hydroxyl group,
0.5 to 11%-wt. of at least one n-substituted (meth)acrylamide derivative,
0.1 to 10%-wt. of at least one vinylcarboxylic acid,
0.05 to 1.0%-wt. of one radical initiator and
5 to 40%-wt. of at least one liquid polyol with a molecular mass of 200 to 10,000
is subjected to polymerization and, after adding 0.3 to 15 parts by weight of a cross-linking agent to 100 parts by weight of polymerisate, is cross-linked by means of heating.

6. Process according to claim 5, characterized in that as (meth)acrylic-acid esters containing the hydroxyl group, 2-hydroxyethyl (meth)acrylate, 2-hydroxypropyl (meth)acrylate and/or 4-hydroxybutyl (meth)-acrylate are used.

7. Process according to claim 5, characterized in that as n-substituted (meth)acrylamide derivatives, compounds of the general formula

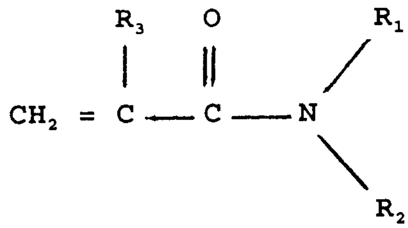

are used, whereby $R_1$ and $R_2$ are equal or different from each other and represent hydrogen, an alkyl, aryl, aryl alkyl, alkyl aryl, alkoxyalkyl, alkoxyaryl, carboxyalkyl, carboxyaryl, acetylalkyl or acetylalkoxyalkyl group, and $R_3$ is hydrogen or a methyl group.

**8.** Process according to any one of claims 1, 2 and 4, characterized in that a mixture of
60 to 90%-wt. of at least one tackifying (meth)acrylic-acid ester,
2 to 40%-wt. of at least one (meth)acrylic-acid ester having a curing effect,
1 to 2%-wt. of at least one vinylcarboxylic acid,
0.05 to 1.0%-wt. of a radical initiator
and
5 to 40% of at least one acrylic oligomer containing the carboxyl group
is subjected to polymerization and, after adding
0.3 to 15 parts by weight of a cross-linking agent to 100 parts by weight of polymerisate, is cross-linked by heating.

**9.** Process according to one of the claims 5 or 8, characterized in that tackifying (meth)acrylic-acid esters are used the homopolymerisate of which have glass transition temperatures of below -39 °C.

**10.** Process according to claim 8, characterized in that (meth)acrylic-acid esters having a curing effect are used, the homopolymerisates of which have glass transition temperatures between 0 °C and +80 °C.

**11.** Process according to claims 8 and 10, characterized in that methyl, tertiary butyl, dodecyl or hexadecyl acrylate, or ethyl, propyl, butyl, pentyl, hexadecyl, methoxyethyl or glycidyl methacrylate are used as (meth)acrylic-acid esters having a curing effect.

**12.** Process according to one of claims 5 or 8, characterized in that (meth)acrylic acid, $\beta$-acryloyloxypropionic acid, vinylacetic acid, trichloroacrylic acid, dimethyl acrylic acid, crotonic acid, fumaric acid, aconitic acid an/or itaconic acid are used as vinylcarboxylic acids.

**13.** Process according to one of claims 5 or 8, characterized in that a polyisocyanate, a metallic acid ester, a metal chelate, a metal alcoholate, or an epoxide, an aziridine, a triazidine or a melamine formaldehyde resin are used as cross-linking agent.

**14.** Process according to claim 13, characterized in that the cross-linking reaction is catalysed by adding an organic acid.

**15.** The use of the pressure-sensitive adhesives manufactured according to one or more of the preceding claims for the production of pressure-sensitive articles.

## Revendications

**1.** Procédé de fabrication de colles de contact par réaction de polymérisation en recourant à l'emploi d'acide méthacrylique ou d'acide acrylique et/ou de leurs dérivés, dans un milieu liquide inerte, caractérisé en ce que le milieu liquide forme un constituant de la colle de contact après la réaction de polymérisation et l'on parvient à l'état prêt à l'utilisation de la colle de contact par une réaction de réticulation.

**2.** Procédé suivant la revendication 1, caractérisé en ce que la proportion du milieu liquide et inerte varie de 5 à 60% en poids, de préférence de 15 à 40% en poids, par rapport à la masse de polymérisation totale.

**3.** Procédé suivant l'une quelconque des revendications 1 et 2, caractérisé en ce que, à titre de milieu liquide et inerte, on utilise un polyol ou un mélange de polyols, d'une masse moléculaire de 200 à 10.000.

**4.** Procédé suivant l'une quelconque des revendications 1 et 2, caractérisé en ce que l'on utilise, à titre de milieu liquide et inerte, des acryloligomères contenant des radicaux carboxyle, d'une masse moléculaire de 1000 à 3500.

**5.** Procédé suivant l'une quelconque des revendications 1 à 3, caractérisé en ce que l'on soumet à la polymérisation un mélange constitué de

- 60 à 90% en poids d'au moins un ester de l'acide méthacrylique ou de l'acide acrylique, conférant de l'adhésivité,
- 1 à 25% en poids d'au moins un ester de l'acide méthacrylique ou acrylique contenant des radicaux hydroxyle,
- 0,5 à 11% en poids d'au moins un dérivé de méthacrylamide ou d'acrylamide, N-substitué,
- 0,1 à 10% en poids d'au moins un acide vinylcarboxylique,
- 0,05 à 1,0% en poids d'un amorceur radicalaire et
- 5 à 40% en poids d'au moins un polyol liquide d'une masse moléculaire de 200 à 10.000 et en ce qu'on la réticule par chauffage après l'addition de 0,3 à 15 parties en poids d'agent de réticulation pour 100 parties en poids de polymère.

**6.** Procédé suivant la revendication 5, caractérisé en ce que, à titre d'esters de l'acide méthacrylique ou de l'acide acrylique contenant des radicaux hydroxyle, on utilise le (méth)acrylate de 2-hydroxyéthyle, le (méth)acrylate de 2-hydroxypropyle et/ou le (méth)acrylate de 4-hydroxybutyle.

**7.** Procédé suivant la revendication 5, caractérisé en ce que l'on utilise, à titre de dérivés du méthacrylamide ou de l'acrylamide, N-substitués, des composés de la formule générale

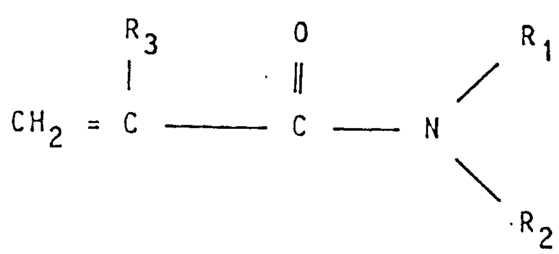

dans laquelle
$R^1$ et $R^2$ sont identiques ou différents et représentent chacun un atome d'hydrogène, un radical alkyle, aryle, arylalkyle, alkylaryle, alcoxyalkyle, alcoxyaryle, carboxyalkyle, carboxyaryle, acétylalkyle ou acétylalcoxyalkyle et $R^3$ représente un atome d'hydrogène ou le radical méthyle.

**8.** Procédé suivant l'une quelconque des revendications 1, 2 et 4, caractérisé en ce que l'on soumet à la polymérisation un mélange constitué de

- 60 à 90% en poids d'au moins un ester de l'acide méthacrylique ou de l'acide acrylique conférant de l'adhésivité,
- 2 à 40% en poids d'au moins un ester de l'acide méthacrylique ou de l'acide méthacrylique conférant de la dureté,
- 1 à 2% en poids d'au moins un acide vinylcarboxylique,
- 0,05 à 1% en poids d'un amorceur radicalaire et
- 5 à 40% en poids d'au moins un acryloligomère contenant des radicaux carboxyle et en ce qu'on le réticule par chauffage après l'addition de 0,3 à 15 parties en poids d'agent de réticulation pour 100 parties en poids de polymère.

**9.** Procédé suivant l'une quelconque des revendications 5 et 8, caractérisé en ce que l'on utilise des esters de l'acide méthacrylique ou acrylique conférant de l'adhésivité, dont les homopolymères possèdent des températures de transition vitreuse inférieures à -39 ° C.

**10.** Procédé suivant la revendication 8, caractérisé en ce que l'on utilise des esters de l'acide (méth)-acrylique ou de l'acide acrylique conférant de la dureté, dont les homopolymères possèdent des températures de transition vitreuse comprises entre 0 ° C et +80 ° C.

**11.** Procédé suivant l'une quelconque des revendications 8 et 10, caractérisé en ce que l'on utilise, à titre d'esters de l'acide (méth)acrylique ou de l'acide acrylique conférant de la dureté, l'acrylate de méthyle, de tert-butyle, de dodécyle ou d'hexadécyle, ou le (méth)acrylate d'éthyle, de propyle, de butyle, de pentyle, d'hexadécyle, de méthoxyéthyle ou de glycidyle.

**12.** Procédé suivant l'une quelconque des revendications 5 et 8, caractérisé en ce que l'on utilise, à titre d'acide vinylcarboxyliques, l'acide méthacrylique ou l'acide acrylique, l'acide $\beta$-acryloyloxypropionique, l'acide vinylacétique, l'acide trichloracrylique, l'acide diméthylacrylique, l'acide crotonique, l'acide fumarique, l'acide aconitique et/ou l'acide itaconique.

**13.** Procédé suivant l'une quelconque des revendications 5 et 8, caractérisé en ce que, à titre d'agent de réticulation, on utilise un polyisocyanate, un ester d'acide contenant un métal, un chélate de métal, un alcoolate de métal, une résine époxyde, d'aziridine, de triazidine ou de mélamine-formaldéhyde.

**14.** Procédé suivant la revendication 13, caractérisé en ce que l'on peut catalyser la réaction de réticulation par l'addition d'un acide organique.

**15.** Utilisation des colles de contact préparées par mise en oeuvre du procédé suivant une ou plusieurs des revendications précédentes en vue de la fabrication d'articles à base de colles de contact.